# EUROPEAN PATENT APPLICATION

(11) **EP 1 998 085 A1**
(43) Date of publication of application: **03.12.2008**
(21) Application number: 08009770.2
(22) Date of filing: 29.05.2008
(51) Int. Cl.: F16J 15/02

(54) **Static outside diameter brush seal assembly**

(30) Priority: 29.05.2007 US 754557
(71) Applicant: Eaton Corporation, Cleveland, Ohio 44114-2584 (US)
(72) Inventor: Daggett, Nicholas P., Coventry, RI 02816 (US); Dacosta, Antonio J., Pawtucket, RI 02861 (US); Trabert, Charles A., Tiverton, RI 002878 (US)
(74) Representative: Schwan - Schwan - Schorer

(57) **Abstract**

An outside diameter brush seal assembly (10) is disclosed. The brush seal assembly (10) includes a first static component (16), a second static component (18), and a brush seal (14). The first and second static components (16, 18) may be configured to form a flow path (26) from a first pressure cavity (HP) to a second pressure cavity (LP). The brush seal (14) includes a plurality of bristles (24) that extend in a radially outward direction from the first static component (16) to form a brush seal (14) against the second static component (18).

## Description

### TECHNICAL FIELD

The present invention relates to static outside diameter sealing brush seals.

### BACKGROUND

Brush seals provide a technology for sealing high pressure areas from low pressure areas, for example, areas associated with gas turbine engines. Typically, brush seals inhibit the flow of a gas in a stream along a shaft.

### SUMMARY

An outside diameter brush seal assembly is disclosed. The brush seal assembly includes a first static component, a second static component, and a brush seal. The first and second static components may be configured to form a flow path from a first pressure cavity to a second pressure cavity. The brush seal includes a plurality of bristles that extend in a radially outward direction from the first static component to form a seal against the second static component.

### BRIEF DESCRIPTION OF THE DRAWINGS

Embodiments of the invention will now be described, by way of example, with reference to the accompanying drawings, wherein:

FIG. 1 is a perspective view of an embodiment of a brush seal assembly;

FIG. 2 is a front view of the assembly illustrated in FIG. 1;

FIG. 3 is a partial section view taken along lines A-A in FIG. 2 and generally illustrating a portion of second static component;

FIG. 4 is a perspective view of another embodiment of a brush seal assembly;

FIG. 5 is a side view of the assembly shown in FIG. 4; and

FIG. 6 is a partial sectional view the assembly shown including a plurality of brush seals.

### DETAILED DESCRIPTION

Reference will now be made in detail to embodiments of the present invention, examples of which are described herein and illustrated in the accompanying drawings. While the invention will be described in conjunction with embodiments, it will be understood that they are not intended to limit the invention to these embodiments. On the contrary, the invention is intended to cover alternatives, modifications and equivalents, which may be included within the spirit and scope of the invention as defined by the appended claims.

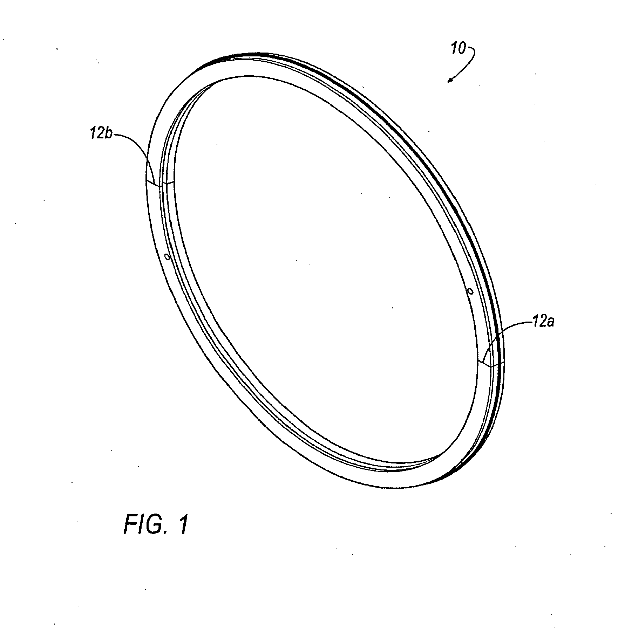

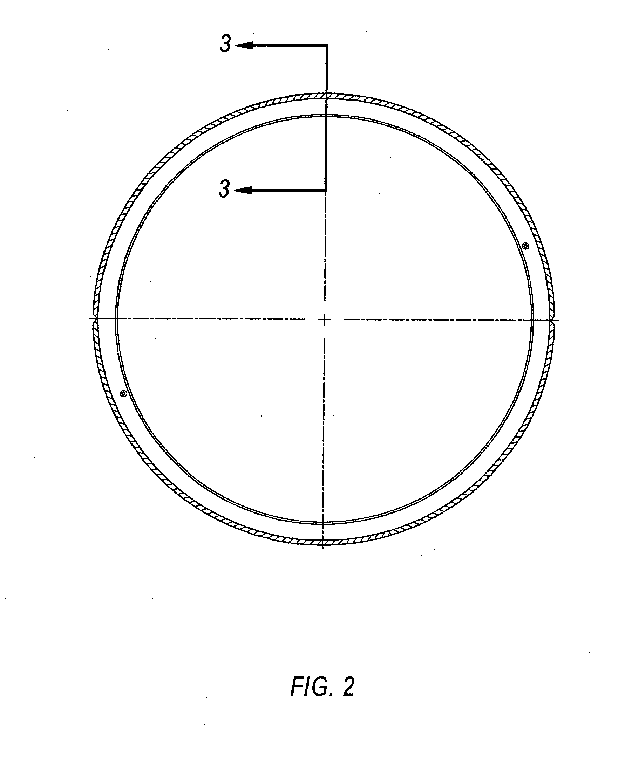

FIG. 1 generally illustrates a perspective view of a brush seal assembly 10 according to an embodiment of the invention. The brush seal assembly 10 may be comprised of two or more segments that form a portion of an outer periphery of the assembly. For example, without limitation, the assembly 10 illustrated in FIG. 1 includes two separate segments - shown separated by separation lines 12a, 12b - each shown extending approximately 180°. FIG. 2 generally illustrates a front view of the assembly 10 shown in FIG. 1.

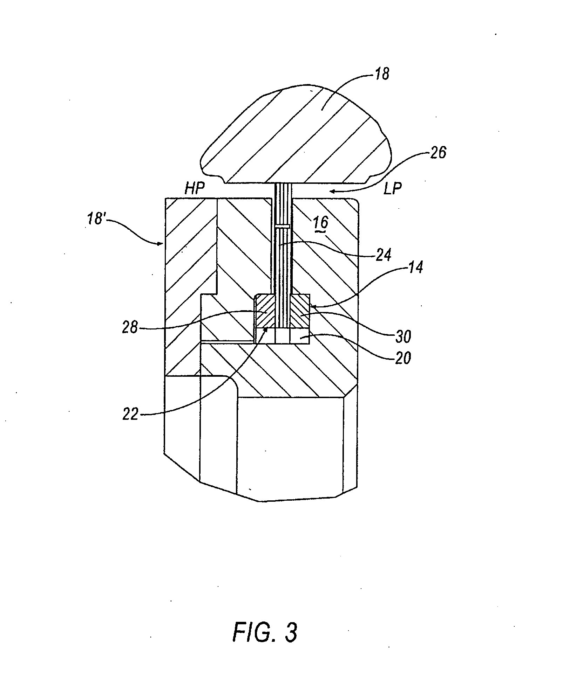

The assembly may be connected with, and in some cases may include, other second static components, such as various casings (e.g., item 18 in Fig. 3). When connected with a second component, the assembly 10 may, for example and without limitation, be rotated or spun into an engaged position. Alternatively, portions of the assembly may be configured to separate and then to overlap in their operational configuration to provide for improved assembly.

As illustrated in FIG. 3, the brush seal assembly 10 may include a brush seal (which may also be referred to as a "brush seal insert") 14 that provides a functional or operative seal between a first static component 16 and a second static component 18, which may be associated with or connected to elements of a housing 18. As used herein, the term "static" is meant to generally pertain to substantially stationary, non-rotating components. However, it is noted that with "static" components there may still be some measure of movement, for example, expansions and/or contractions in response to changes in thermal conditions.

In an embodiment, first static component 16 includes a groove or receiving portion 20 for receiving a portion of the brush seal 14. Groove or receiving portion 20 may, for example, have a length taken along a longitudinal direction of the assembly of at least 0.050 inches. In an embodiment, the first static component 16 may have a length taken along a longitudinal direction of the assembly of .510 inches ± .002 inches.

Brush seal 14 may include a segment or ring 22 that is retained within a portion of the groove or receiving portion 20 of the first static component 16. Brush seal 14 further includes a plurality of bristles (generally represented as 24) that extend in a radially outward direction from the first static component. An outer portion of the bristles 24 form a seal against second static component 18. Bristles 24 may, for example, be comprised of a bronze alloy, a ceramic material, a stainless steel alloy, a cobalt-based alloy, or a nickel-based alloy. In an embodiment, bristles 24 may be interference-fit within the groove or receiving portion 20 of first static component 16 and, for some applications, may not include a weld bead.

First and second static components 16,18 can be configured to form a flow path (generally identified as 26) from a first (e.g. high-pressure) pressure cavity **HP** to a second (e.g., low-pressure) pressure cavity **LP.** Brush seal 14 may be interposed along the flow path 26 formed between the first and second static components 16,18, functionally separating and limiting the amount of flow between first and second pressure cavities **HP,LP.** In an embodiment, the seal 14 may be provided such that only a portion of the bristles 24 are configured to sealingly engage or contact a portion of second static component. Further in an embodiment, the brush seal does not include a static seal (e.g., a labyrinth seal) with respect to the second static component. That is, conventional labyrinth-type seals generally require at least one labyrinth tooth for use as a backing. The present invention does not require such a tooth or backing.

In an embodiment, brush seal ring or segment 22 may include one or more side plates or rails (e.g., 28, 30) adjacent to the bristles and received within a portion of the receiving portion 20 of first static component 16. The one or more brush seal side plates or rails may, without limitation, be comprised of stainless steel or a nickel-based alloy. For some embodiments, all or a portion of the one or more side plates or rails 28,30 may be flexible and/or linear. Moreover, the side plates or rails may be configured to be generally annular and, if desired, may comprise a rigid ring.

For some embodiments, first and second static components 16,18 may be comprised of different materials that have different rates of thermal expansion. Differing rates of thermal expansion of first and second static components 16,18 in proximity to the brush seal 14 can provide a gap between surfaces of first and second static components under one or more operational conditions. For many applications, a large difference in thermal expansion may be anticipated. Many conventional static brush seals may only permit a radial expansion of 0.050 inch. As discussed further herein, embodiments of the present invention may permit radial movement up to ½ inch or more.

Because the gap between the surfaces of the first and second static components 16,18 may change, it may be desirable to account for the gap, and the potential wear and tear on the associated bristles 28, with the selection of materials based, for instance, on desired results (e.g., gap control) in connection with anticipated operating conditions. For many applications, the assembly may also take into account the radial movement of the bristles 28. For example, without limitation, if the bristles are generally in operational contact with the second static component 18, and the gap between the first and second static components 16,18 becomes reduced, in an embodiment the bristles are provided with some measure of responsive radial movement. In the embodiment illustrated in FIG. 3, the brush seal 14, and consequently the associated bristles may have some radial "play" within groove or receiving portion 20. In some instances, such range of movement can relieve or reduce contact stresses between the bristles 24 and the second static component 18.

For some embodiments, bristles 24 have a range, for example, of from 0.050 inches to 0.060 inches. In another embodiment, bristles 24 may have a radial range of movement of at least 0.060 inches. In yet other embodiments, bristles 24 may have a radial range of movement of 0.20 inches or more. Moreover, for some applications, it may be desirable to provide bristles 24 to form a bristle pack having a density that is sufficient to prevent splaying apart circumferentially when the bristles extend radially outwardly in a contact configuration. That is, the assembly can be provided to maintain substantially constant interference and maintain pack density. In some embodiments, the bristles have a uniform pack density throughout their extent from the first static component 16 to an outer sealing end that sealingly engaging a second static component 18. If desired, particularly for ensuring that the brush seal remains flexible and does not need to be too large, the brush seal 14 may include a side plate or rail with a moment of inertia of 5 x 10⁻⁵ inches⁴ or less. Additionally, in an embodiment, bristles 24 may be oriented at an angle of 20 to 90 degrees tangent to a sealing surface of the second static component 18.

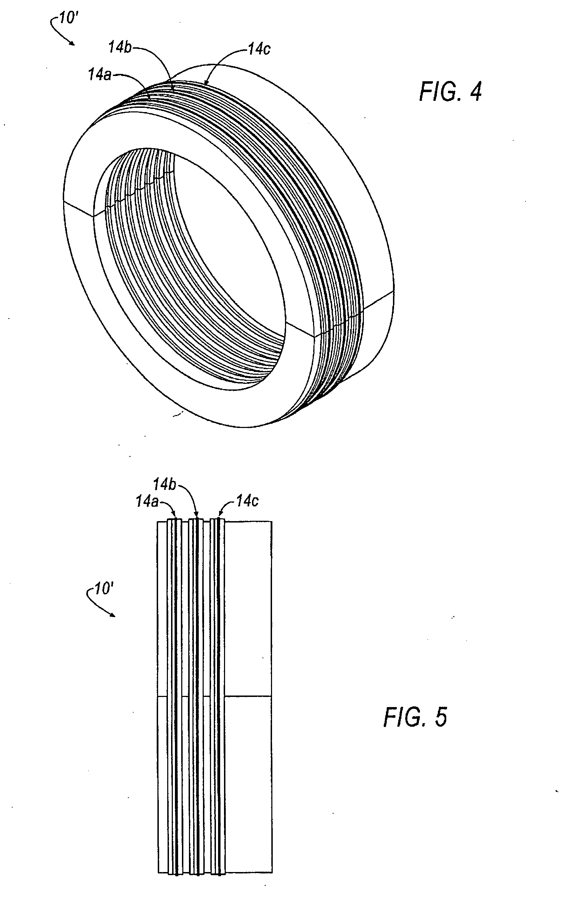

The invention is not, however, limited to brush seal assemblies having a single brush seal. FIGS. 4-6 generally represent additional embodiments of the invention with a plurality of brush seals. More specifically, FIG. 4 illustrates a perspective view of an embodiment of an assembly 10' shown with three outer diameter brush seals 14a,14b,14c, each brush seal extending circumferentially, or substantially circumferentially, around the outer perimeter of the assembly. FIG. 5 is a side view of the assembly shown in FIG. 4.

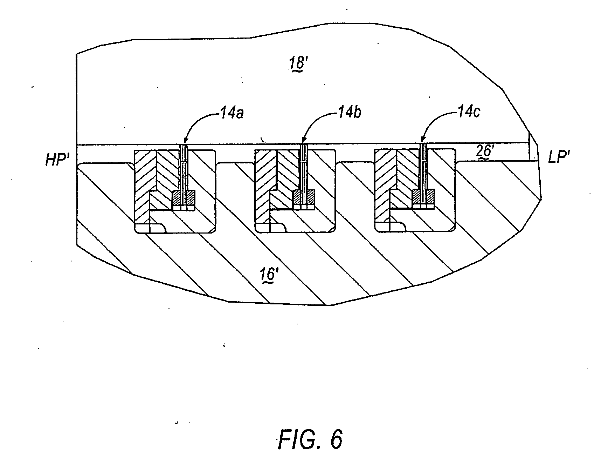

FIG. 6 is partial sectional view of the assembly 10' similar to the view shown in FIG. 3. As generally shown, one or more brush seals 14a,14b,14c may be included with the assembly 10'. In a similar fashion as the previously described embodiments, brush seals 14a,14b,14c may be interposed along a flow path 26' formed between the first and second static components 16',18', functionally separating and limiting the amount of flow between first and second pressure cavities **HP',LP'.**

The foregoing descriptions of specific embodiments of the present invention have been presented for purposes of illustration and description. They are not intended to be exhaustive or to limit the invention to the precise forms disclosed, and various modifications and variations are possible in light of the above teaching. The embodiments were chosen and described in order to explain the principles of the invention and its practical application, to thereby enable others skilled in the art to utilize the invention and various embodiments with various modifications as are suited to the particular use contemplated. It is intended that the scope of the invention be defined by the claims appended hereto and their equivalents.

## Claims

1. An outside diameter brush seal assembly (10), comprising:
a first static component (16) including a groove or receiving portion (20);
a second static component (18), the first and second static components (16, 18) configured to form a flow path (26) from a first pressure cavity (HP) to a second pressure cavity (LP); and
a flexible brush seal (14) including a segment or ring (22) retained within a portion of the groove or receiving portion (20) of the first static component (16), the brush seal (14) further including a plurality of bristles (24) that extend in a radially outward direction from the first static component (16) to form a brush seal (14) against the second static component (18);
wherein the brush seal (14) is interposed along said flow path (26) between said first and second pressure cavities (HP, LP), and only the bristles (24) are configured to sealingly engage or contact a portion of the second static component (18).

2. The brush seal assembly (10) of claim 1, wherein the brush seal (14) is devoid of a static seal with respect to the second static component (18).

3. The brush seal assembly (10) of claim 1, wherein the brush seal (14) assembly is devoid of a labyrinth seal.

4. The brush seal assembly (10) of claim 1, wherein the brush seal (14) limits the amount of flow between said first and second pressure cavities (HP, LP).

5. The brush seal assembly (10) of claim 1, wherein the brush seal ring or segment (22) includes one or more side plates or rails (28, 30) adjacent to the bristles (24) and received within a portion of the receiving portion (20) of the first static component (16).

6. The brush seal assembly (10) of claim 5, wherein the one or more side plates or rails (28, 30) are flexible.

7. The brush seal assembly (10) of claim 5, wherein the side plates or rails (28, 30) are annular.

8. The brush seal assembly (10) of claim 5, wherein the side plates or rails (28, 30) comprise a rigid ring.

9. The brush seal assembly (10) of claim 5, wherein the side plates or rails (28, 30) are linear.

10. The brush seal assembly (10) of claim 5, wherein the side plate or rail (28, 30) has a moment of inertia of 5 x 10⁻⁵ inches⁴ or less.

11. The brush seal assembly (10) of claim 1, wherein the first and second static components (16, 18) are comprised of different materials and have different rates of thermal expansion.

12. The brush seal assembly (10) of claim 1, wherein the bristles (24) have a radial range of movement of at least 0.060 inches.

13. The brush seal assembly (10) of claim 1, wherein the bristles (24) are oriented at an angle of 30 to 90 degrees tangent to a sealing surface of the second static component (18).

14. The brush seal assembly (10) of claim 1, wherein the bristles (24) are interference-fit within the groove or receiving portion (20) of the first static component (16).

15. An outside diameter brush seal assembly (10'), comprising:
a first static component (16') including a groove or receiving portion (20');
a second static component (18'), the first and second static components (16', 18') configured to form a flow path (26') from a first pressure cavity (HP')to a second pressure cavity (LP'); and
a plurality of flexible brush seals (14a, 14b, 14c), each brush seal including a segment or ring (22') retained within a portion of the groove or receiving portion (20') of the first static component (16'), the brush seal (14a, 14b, 14c) further including a plurality of bristles 24') that extend in a radially outward direction from the first static component (16')to form a brush seal against the second static component (18');
wherein the plurality of brush seals (14a, 14b, 14c) are interposed along said flow path (26') between said first and second pressure cavities (HP', LP'), and only the bristles (24') are configured to sealingly engage or contact a portion of the second static component (18').

16. The assembly (10') of claim 15, wherein the plurality of brush seals (14a, 14b, 14c) are devoid of a static seal.

17. The assembly (10') of claim 15, wherein the brush seals (14a, 14b, 14c) include one or more side plates or rails (28', 30') adjacent to the bristles (24') and received within a portion of the receiving portion (20')of the first static component (16').

18. The brush seal assembly (10') of claim 15, wherein the first and second static components (16', 18') have different rates of thermal expansion.
